# FASCICULE DE BREVET EUROPEEN

(11) **EP 3 833 579 B1**
(45) Date de publication et mention de la délivrance du brevet: **14.06.2023**
(21) Numéro de dépôt: 19748868.7
(22) Date de dépôt: 09.07.2019
(51) Int. Cl.: B60R 21/02, B60P 7/14, B61D 45/00

(54) **DISPOSITIF DE REGLAGE DE FIXATION POUR VEHICULE UTILITAIRE**
BEFESTIGUNGSREGELUNGSVORRICHTUNG FÜR EIN NUTZFAHRZEUG
FIXATION ADJUSTING DEVICE FOR COMMERCIAL VEHICLE

(30) Priorité: 07.08.2018 FR 1857369
(43) Date de publication de la demande: 16.06.2021
(73) Titulaire: PSA Automobiles SA, 78300 Poissy (FR)
(72) Inventeur: VIRY, Patrick, 25200 MONTBELIARD (FR); VAZQUEZ, Ruben, 36400 PORRINO (PONTEVEDRA) (ES); VAZQUEZ SABARIEGO, José Ignacio, 36400 PORRINO (PONTEVEDRA) (ES)
(86) Numéro de dépôt international: PCT/FR2019/051724
(87) Numéro de publication internationale: WO 2020/030863

(56) Documents cités:
- EP-A2- 2 113 427
- WO-A1-2017/063676
- FR-A1- 2 530 560
- FR-A1- 3 010 018

## Description

La présente invention concerne le domaine des véhicules utilitaires, et en particulier les véhicules utilitaires équipés d'une cloison de séparation destinée à séparer un habitacle du véhicule d'un espace de chargement, de sorte à empêcher des charges (des objets lourds et/ou volumineux) qui sont stockées dans l'espace de chargement, de passer dans l'habitacle en cas de choc véhicule.

Cependant, il peut être intéressant de prévoir une option consistant à offrir une cloison de séparation mobile pour améliorer la modularité du véhicule utilitaire. Le document AU2009230744 décrit un ensemble multi position de cloison de séparation de véhicule comprenant au moins un support adapté pour localiser et verrouiller sur celle-ci de sorte que la paroi de séparation soit verrouillable à des positions prédéterminées le long du support. Le document WO201851314 décrit également une paroi de séparation pour des véhicules utilitaires qui comprend au moins une plaque fixe et une porte coulissante qui peut coulisser par rapport à ladite paroi fixe, prédisposée pour séparer la cabine du véhicule du compartiment de chargement. En contrepartie, il faut prévoir des dispositifs de guidage pour par exemple permettre une translation de la cloison de séparation dans le véhicule.

Le document FR2530560 montre le préambule de la revendication 1 et décrit un wagon comportant une cloison de séparation mobile, qui peut être maintenue dans une position donnée à l'aide d'un dispositif de verrouillage.

De tels dispositifs de guidage comportent typiquement un rail de guidage et un chariot de guidage qui coulisse dans le rail. Pour des raisons de sécurité notamment lors de choc frontal, il est nécessaire d'assurer le blocage de la paroi de séparation. Par ailleurs, en raison des tolérances de fabrication, même en position de blocage, il peut subsister un jeu dans les dispositifs de fixation de la paroi de séparation qui peuvent engendrer des bruits parasites lors des phases de roulage du véhicule.

Un des buts de l'invention est de proposer des dispositifs de fixation à monter en véhicule, qui soient simples à fabriquer, et dont l'installation en véhicule ne requière pas de précaution ni d'opération complexes.

A cet effet, un premier objet de l'invention concerne un dispositif de réglage fixation pour une cloison de séparation d'un véhicule utilitaire, comprenant :
- un chariot de guidage agencé pour recevoir la cloison de séparation,
- un rail de guidage agencé pour permettre le déplacement du chariot de guidage selon un longitudinal du véhicule ,
caractérisé en ce que le dispositif de fixation comprend un verrou supérieur bloquant le déplacement du chariot de guidage selon l'axe longitudinal, le verrou supérieur comprend une butée élastique générant une contrainte sur le chariot de guidage contre le rail de guidage dans une deuxième direction perpendiculaire à l'axe longitudinal et comprise dans un plan vertical, la butée élastique est montée sur un élément de réglage du niveau de contrainte exercée sur la butée élastique.

Le dispositif de réglage de fixation selon la mise en oeuvre ci-dessus assure un maintien robuste de la cloison de séparation dans la caisse du véhicule. Par ailleurs, la butée élastique du verrou supérieur permettent de compenser les jeux d'assemblage entre la cloison et les verrous ce qui supprime ou limite les mouvements parasites de la cloison de séparation lors des phases de roulage et réduit ainsi le bruit. La possibilité de régler la contrainte de la butée élastique permet de garantir un niveau de contrainte sensiblement constant quel que soit les jeux d'assemblage.

Avantageusement, le verrou supérieur comprend un axe de verrouillage pour bloquer le mouvement du chariot de guidage sur le rail de guidage, et un levier de manoeuvre agencé pour déplacer l'axe de verrouillage selon la deuxième direction, et pour solliciter la butée élastique lorsque l'axe de verrouillage est en position de blocage du chariot de guidage pour générer la contrainte sur le chariot de guidage

Avantageusement, l'élément de réglage comprend un axe monté en translation et un loquet de verrouillage de l'axe en position.

Avantageusement, l'axe comprend une crémaillère dans laquelle vient s'enclencher le loquet.

Avantageusement, le loquet est monté contre un ressort sollicitant le loquet dans la position de verrouillage de l'axe

Avantageusement, l'élément de réglage comprend un axe fileté monté dans un orifice taraudé

Un deuxième aspect de l'invention concerne un véhicule utilitaire automobile comprenant un premier et un deuxième dispositif de fixation selon le premier aspect.

Avantageusement, le véhicule utilitaire automobile comprend une cloison de séparation, agencée pour séparer un habitacle d'un espace de chargement, dans lequel la cloison de séparation est agencée pour être fixée à chacun des chariots de guidage de chaque dispositif de guidage.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue isométrique d'un intérieur de véhicule utilitaire, comprenant une cloison de séparation séparant un habitacle d'un espace de chargement du véhicule utilitaire ;
- la figure 2 représente une vue avant du véhicule de la figure 1 ;
- la figure 3 représente un détail d'un verrou supérieur du dispositif de fixation de la paroi de séparation,
- la figure 4 représente un détail de l'élément de réglage de la butée élastique,

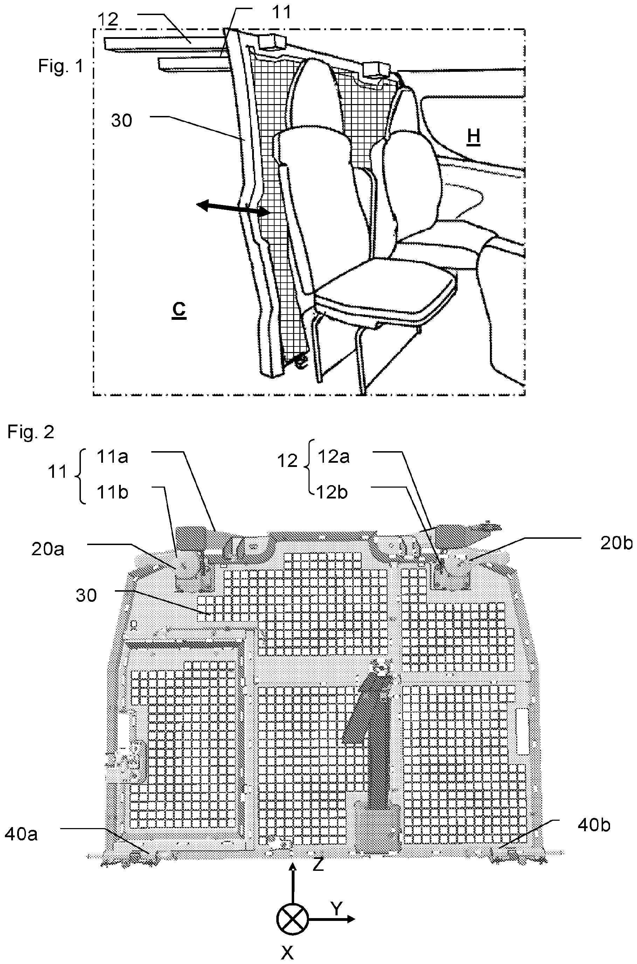

La figure 1 représente un véhicule utilitaire avec une cloison de séparation 30 qui peut coulisser le long d'un axe longitudinal X du véhicule. A cet effet, deux dispositifs de guidage 11 et 12 sont prévus.

Comme le montre la figure 2, chaque dispositif de guidage est principalement formé par un rail de guidage 11a et 12a, et par un chariot de guidage 11b et 12b respectivement.

La cloison de séparation 30 est vissée sur chacun des chariots de guidage 11b et 12b. Afin de maintenir en position la cloison de séparation 30 dans véhicule, celle-ci comprend un dispositif de fixation 20a, 20b, 40a, 40b. Ce dispositif de fixation a pour fonction de maintenir fermement la cloison de séparation 30 en place dans le véhicule lors des phases de roulage mais également lors d'un choc du véhicule.

Le dispositif de fixation comprend un verrou supérieur 20a, 20b pour chaque chariot de guidage 11b, 12b et par exemple au moins un verrou inférieur 40a, 40b situé par exemple sur la périphérie et en partie basse la cloison de séparation 30. Le verrou supérieur 20a, 20b assure le blocage de la cloison par rapport au rail de guidage 11a, 11b, Le verrou inférieur 40a, 40b assure le blocage de la cloison de séparation par rapport à la caisse (non représentée) du véhicule.

Le verrou supérieur 20a, 20b comprend d'une part un moyen pour bloquer le mouvement le chariot de guidage 11b, 12b dans le rail de guidage 11a, 12b et d'autre part une butée élastique (non représentée) qui vient générer un contrainte sur le chariot de guidage 11b, 12b contre le rail de guidage 11a, 11b. En d'autre terme, le moyen de blocage du verrou supérieur 11b, 11 assure un verrouillage selon l'axe longitudinal X du véhicule. La butée élastique assure une contrainte selon une première direction Z transversale à l'axe longitudinal X et sensiblement verticale. Cette contrainte permet notamment de mettre en tension la cloison de séparation 30 pour d'une part compenser les jeux d'assemblage notamment entre le chariot de guidage 11b, 12b et le rail de guidage 12a, 12b et d'autre part compenser des déformation de la cloison de séparation 30 liées à son propre poids ou aux accélération du véhicule. Ainsi les mouvements parasites de la cloison de séparation 30 selon l'axe longitudinal X et selon la première direction Z sont supprimés ou pour le moins fortement réduite ce qui réduit les bruits de la cloison de séparation 30 lors des phases de roulage.

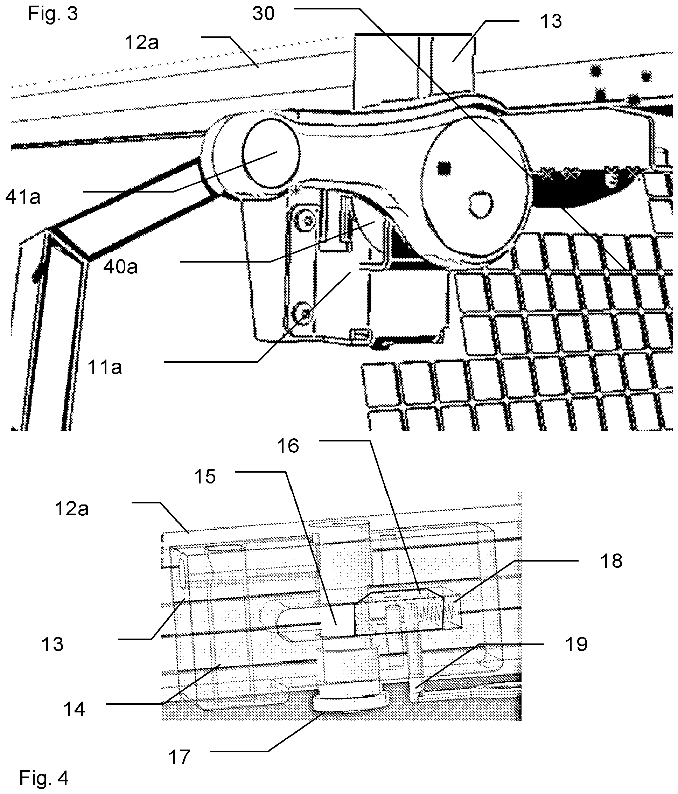

Comme représenté sur la figure 3, le verrou supérieur 40a comprend un levier de manoeuvre 41a pour déplacer un axe de verrouillage (non représenté). L'axe de verrouillage est monté sur le chariot de guidage 11a par exemple selon la direction deuxième Z verticale et vient s'engager dans un orifice ou une gâche 14, fig. 4 formée sur le rail 12a de guidage par exemple dans un boitier 13 solidaire du rail 12a. Ainsi lorsque l'axe de verrouillage est engagé dans l'orifice, le mouvement du chariot de guidage 11a est verrouillé selon l'axe longitudinal X. Le levier de manoeuvre 41a est également agencé pour mettre sous contrainte la butée élastique lorsque de l'axe de verrouillage est engagé dans le rail de guidage 12a. A titre d'exemple, le levier de manoeuvre 41a est monté rotatif et comprend une came (non représentée). Lors du mouvement de rotation du levier de manoeuvre 41a, la came déplace dans un premier temps l'axe de verrouillage dans la gâche 14. Dans un deuxième temps, la came vient exercer une contrainte élastique par l'intermédiaire de la compression de la butée élastique qui exerce alors à son tour la contrainte sur le chariot selon la première direction Z. En fin de mouvement de rotation le levier de manoeuvre est maintenu en position, par exemple par un loquet pour empêcher tout désengagement intempestif de l'axe de verrouillage.

Comme représenté sur la figure 4, le verrou supérieur 40a comprend un élément 15, 16, 18, 19 de réglage de la butée élastique. Selon le mode de réalisation représenté, l'élément de réglage 15, 16, 18, 19 est logé dans le boitier 13 comprenant également la gâche 14. Selon le mode de réalisation représenté, l'élément de réglage comprend un axe 15 monté coulissant dans un orifice. Une extrémité libre 17 de l'axe 15 constitue la surface d'appui de la butée élastique. L'axe 15 est par exemple perpendiculaire au rail de guidage 12a.

On comprend qu'en fonction de la position de l'axe 15 dans l'orifice celui-ci va modifie la position de la surface d'appui 17 de la butée élastique. L'élément de réglage comprend également un loquet 16, 18 pour maintenir en position l'axe 15 lorsque la position de réglage est obtenu. Le loquet 16 bloque au moins le mouvement de translation de l'axe 15.

Selon l'exemple de réalisation, le loquet 16 est maintenu en position de blocage de l'axe 15 par un ressort 18. Avant l'opération de réglage, le loquet 16 est maintenu en position non bloquant par exemple par une goupille 19. Le retrait de la goupille 19 provoque le déplacement du loquet 16 sous l'action du ressort 18.

L'interaction mécanique entre le loquet 16 et l'axe 15 est par exemple de type crémaillère.

Selon un autre mode de réalisation, l'élément de réglage est par exemple formé par un axe fileté monté dans un orifice taraudé. Cette variante réduit le nombre de pièce. Par contre l'opération de réglage est plus longue puisqu'il faut dévisser l'axe jusque dans la bonne position.

Le fonctionnement de l'élément de réglage selon l'invention est le suivant. Lors de l'assemblage du véhicule, les rails de guidage 12a, 12b, les chariots de guidage 11a, 11b et la cloison de séparation 30 sont assemblés dans la caisse du véhicule. L'axe 15 de l'élément de réglage de chaque chariot de guidage 11a, 11b et placé bloque en position maximale. Cette position correspond à la position selon laquelle la surface d'appui 17 est plus près du rai de guidage 12a. En d'autre terme, l'espace située en dessous la surface d'appui 17 est le plus important ;

La cloison de séparation 30 est positionnée en vis-à-vis d'un boitier 13 du rail de guidage 12a, 12b. Le levier 41a de manoeuvre est actionné jusqu'à engager l'axe de verrouillage dans la gâche mais pas jusqu'à générer une contrainte sur la butée élastique.

Dans cette position, la cloison de séparation 30 est bloquée selon l'axe longitudinale X. la butée élastique est alors située juste à l'aplomb de la surface d'appui 17 de l'axe 15. L'axe 15 est alors libéré en. La surface d'appui 17 de l'axe vient alors en contact avec la butée élastique par l'effet de la gravité. L'axe 15 est ensuite bloqué dans cette position en relâchant le loquet 18. Le mouvement du levier de manoeuvre est poursuivi pour appliquer la contrainte sur la butée élastique.

Ainsi, on comprend que quel que soit les jeux fonctionnels, le niveau de contrainte appliquée sur la butée élastique correspondra toujours à la fin de course du levier de manoeuvre.

Si l'élément de réglage est un axe fileté, la position de la surface d'appui sur la butée élastique s'effectue en dévissant l'axe.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Dispositif de fixation pour une cloison de séparation (30) d'un véhicule utilitaire, comprenant :
- un chariot de guidage (11b, 12b) agencé pour recevoir la cloison de séparation (30),
- un rail de guidage (11a, 12a) agencé pour permettre le déplacement du chariot de guidage (11b, 12b) selon un longitudinal (X) du véhicule , le dispositif de fixation comprenant un verrou supérieur (20a, 20b) bloquant le déplacement du chariot de guidage (11b, 12b) selon l'axe longitudinal (X), **caractérisé en ce que** le verrou supérieur (20a, 20b) comprend une butée élastique générant une contrainte sur le chariot de guidage (11b, 12b) contre le rail de guidage dans une deuxième direction perpendiculaire (Z) à l'axe longitudinal (X) et comprise dans un plan vertical, la butée élastique est montée sur un élément de réglage (15, 16, 18, 19) du niveau de contrainte exercée sur la butée élastique.

2. Dispositif de fixation selon la revendication précédente, dans lequel le verrou supérieur (40a, 40b) comprend un axe de verrouillage pour bloquer le mouvement du chariot de guidage (11b, 12b) sur le rail de guidage (11a, 12a), et un levier de manoeuvre (41a) agencé pour déplacer l'axe de verrouillage selon la deuxième direction (Z), et pour solliciter la butée élastique lorsque l'axe de verrouillage est en position de blocage du chariot de guidage pour générer la contrainte sur le chariot de guidage (11b, 11a)

3. Dispositif de fixation selon la revendication 1 ou 2, dans lequel l'élément de réglage (15, 16, 18, 19) comprend un axe (15) monté en translation et un loquet (16) de verrouillage de l'axe en position.

4. Dispositif de fixation selon la revendication précédente, dans lequel l'axe (15) comprend une crémaillère dans laquelle vient s'enclencher le loquet (16).

5. Dispositif de fixation selon la revendication 3 ou 4, dans lequel le loquet (16) est monté contre un ressort (18) sollicitant le loquet dans la position de verrouillage de l'axe.

6. Dispositif de fixation selon la revendication 1 ou 2, dans lequel l'élément de réglage comprend un axe fileté monté dans un orifice taraudé.

7. Véhicule utilitaire automobile comprenant un premier et un deuxième dispositif de fixation selon l'une des revendications précédentes, et comprenant une cloison de séparation (30), agencée pour séparer un habitacle d'un espace de chargement, dans lequel la cloison de séparation (30) est agencée pour être fixée à chacun des chariots de guidage et maintenu en position par les verrous supérieurs (40a, 40b).

## Patentansprüche

1. Befestigungsvorrichtung für eine Trennwand (30) eines Nutzfahrzeugs, bestehend aus:
- einem Führungswagen (11b, 12b) zur Aufnahme der Trennwand (30),
- eine Führungsschiene (11a, 12a), die zur Bewegung des Führungsschlittens (11b, 12b) entlang einer Fahrzeuglängsachse (X) angeordnet ist,
**dadurch gekennzeichnet, dass** die Befestigungsvorrichtung einen oberen Riegel (20a, 20b) umfasst, der die Bewegung des Führungswagens (11b, 12b) entlang der Längsachse (X) blockiert, **dadurch gekennzeichnet, dass** der obere Riegel (20a, 20b) einen elastischen Anschlag umfasst, der eine Spannung auf dem Führungswagen (11b, 12b) gegen die Führungsschiene in einer zweiten Richtung senkrecht zur Längsachse (X) und in einer vertikalen Ebene erzeugt, wobei der elastische Anschlag an einem Stellelement (15, 16, 18, 1 angebracht ist 9) der Höhe der auf den elastischen Anschlag ausgeübten Belastung.

2. Befestigungsvorrichtung nach dem vorhergehenden Anspruch, wobei die obere Verriegelung (40a, 40b) einen Verriegelungsstift zum Blockieren der Bewegung des Führungsschlittens (11b, 12b) auf der Führungsschiene (11a, 12a) und einen Betätigungshebel (41a) aufweist, der angeordnet ist, um den Verriegelungsstift in die zweite Richtung (Z) zu bewegen und um den elastischen Anschlag vorzuspannen, wenn der Verriegelungsstift in der Verriegelungsposition des Führungsschlittens ist, um die Spannung auf dem Führungsschlitten (11b, 11a) zu erzeugen

3. Befestigungsvorrichtung nach Anspruch 1 oder 2, bei der das Einstellelement (15, 16, 18, 19) einen verschiebbar gelagerten Stift (15) und eine Verriegelung (16) zum Verriegeln des Stiftes in der Position aufweist.

4. Befestigungsvorrichtung nach dem vorhergehenden Anspruch, bei der der Stift (15) eine Zahnstange umfasst, in die der Riegel (16) eingreift.

5. Befestigungsvorrichtung nach Anspruch 3 oder 4, bei der der Riegel (16) an einer Feder (18) angebracht ist, die den Riegel in die Verriegelungsstellung des Bolzens vorspannt.

6. Befestigungsvorrichtung nach Anspruch 1 oder 2, wobei das Einstellelement einen Gewindestift aufweist, der in einer Gewindebohrung montiert ist.

7. Kraftfahrzeug mit einer ersten und einer zweiten Befestigungsvorrichtung nach einem der vorhergehenden Ansprüche und mit einer Trennwand (30), die angeordnet ist, um einen Fahrgastraum von einem Laderaum zu trennen, wobei die Trennwand (30) angeordnet ist, um an jedem der Führungswagen befestigt zu werden und durch die oberen Riegel (40a, 40b) in Position gehalten zu werden.

## Claims

1. Fixing device for a partition wall (30) of a commercial vehicle, comprising:
- a guide carriage (11 b, 12 b) arranged to receive the separation partition (30),
- a guide rail (11 a, 12 a) arranged to allow the movement of the guide carriage (11 b, 12 b) along a longitudinal (X) of the vehicle,
**characterized in that** the fixing device comprising an upper lock (20a, 20b) blocking the movement of the guide carriage (11b, 12b) along the longitudinal axis (X), **characterized in that** the upper lock (20a, 20b) comprises an elastic stop generating a stress on the guide carriage (11b, 12b) against the guide rail in a second direction perpendicular (Z) to the longitudinal axis (X) and lying in a vertical plane, the elastic stop is mounted on an adjusting element (15, 16, 18, 19) the level of stress exerted on the elastic stop.

2. A fixing device according to the preceding claim, in which the upper lock (40a, 40b) comprises a locking pin for blocking the movement of the guide carriage (11b, 12b) on the guide rail (11a, 12a), and an operating lever (41a) arranged to move the locking pin in the second direction (Z), and to urge the elastic stop when the locking pin is in the blocking position of the guide carriage to generate the stress on the guide carriage (11b, 11a)

3. A fixing device according to claim 1 or 2, in which the adjusting element (15, 16, 18, 19) comprises a pin (15) mounted in translation and a latch (16) for locking the pin in position.

4. A fastening device according to the preceding claim, in which the pin (15) comprises a rack in which the latch (16) is engaged.

5. A fastening device according to claim 3 or 4, in which the latch (16) is mounted against a spring (18) urging the latch into the locking position of the pin.

6. A fastening device according to claim 1 or 2, in which the adjusting element comprises a threaded pin mounted in a tapped orifice.

7. Motor of a commercial vehicle comprising a first and a second fastening device according to one of the preceding claims, and comprising a separation partition (30), arranged to separate a passenger compartment from a loading space, in which the separation partition (30) is arranged to be fastened to each of the guide carriages and held in position by the upper locks (40a, 40b).
